# EUROPEAN PATENT APPLICATION

(11) **EP 1 443 665 A1**
(43) Date of publication of application: **04.08.2004**
(21) Application number: 04001809.5
(22) Date of filing: 28.01.2004
(51) Int. Cl.: H04B 1/20

(54) **Electronic apparatus and remote control method used in the apparatus**

(30) Priority: 31.01.2003 JP 2003023879
(71) Applicant: Kabushiki Kaisha Toshiba, Tokyo (JP)
(72) Inventor: Tomoda, Ichiro, Toshiba Corporation, Tokyo 105-8001 (JP); Nakasato, Shigemi, Toshiba Corporation, Tokyo 105-8001 (JP); Iwasaki, Junichi, Toshiba Corporation, Tokyo 105-8001 (JP); Yamashita, Makoto, Toshiba Corporation, Tokyo 105-8001 (JP); Ide, Kenichi, Toshiba Corporation, Tokyo 105-8001 (JP); Ushimaru, Chikara, Toshiba Corporation, Tokyo 105-8001 (JP)
(74) Representative: Henkel, Feiler & Hänzel

(57) **Abstract**

A headset (1) has a voice recognition unit. It allows control of an external apparatus by a voice input through a microphone (105). The headset (1) also has a switch (106) for controlling execution of a voice recognition process, so that the user can start and stop the voice recognition process as desired. The switch (106) is provided remotely of the microphone (105) to avoid interference with the voice commands from the user. In one embodiment, the switch (106) is provided on one speaker unit (101) on the side opposite to the speaker unit (102) on which the microphone (105) is provided in order to prevent noise, such as an operation noise of the switch (106), from being input to the microphone (105).

## Description

The present invention relates to an electronic apparatus having a speaker and a microphone and to a remote control method used in the apparatus.

In recent years, attention has been given to Bluetooth(R) as a wireless communication technology. Bluetooth(R) is a low-cost and low-power consumption short-range wireless communication technology, which is suitable for mobile apparatus. It is used to connect mobile information apparatuses owned by individual users. Since the apparatuses are wirelessly connected to one another, various apparatuses can be connected more freely, simply and easily as compared to the conventional wired connection.

A apparatus having a portable music player and a headphone wirelessly connected is known as one of the mobile information apparatuses utilizing wireless communication (see, for example, Jpn. Pat. Appln. KOKAI Publication No. 2002-112383).

In the conventional wired connection style, to listen to music, a headphone or a headset (with a microphone for conversation) must be connected to a portable music player through a cable. For telephone conversations, the headset must be connected to a cellular phone through a cable. Further, to process a voice signal, the headset must be connected to a notebook computer through a cable.

On the other hand, in the case of wireless connection, a headphone or headset can be immediately connected to a required apparatus without a cable and thus without disconnecting the cable from one unit and connecting it to another.

In general, user interfaces on which the headphone or headset can be mounted are limited. For example, it is difficult to mount a display on the headphone or headset. Further, only a limited number of buttons or switches can be mounted thereon. Therefore, it is practically difficult for the user to control an external apparatus, such as a portable music player by operating the headphone or headset itself.

In particular, if the headphone or headset is wirelessly connected to the external apparatus, a remote control unit cannot be connected between the headphone or headset and the external apparatus, unlike in the case of cable connection.

The present invention has been made in consideration of the above situations. An object of the invention is to provide an electronic apparatus that can efficiently control operations of an external apparatus, such as a portable music player, and a remote control method used in the apparatus.

To achieve the above object, an electronic apparatus according to an aspect of the present invention characterized by comprising a speaker support unit which includes at least one speaker, a microphone, a voice recognition means for executing a voice recognition process to recognize a voice signal input through the microphone, an operation switch which is provided remotely of the microphone, and a command transmission means for transmitting, to an external apparatus, a command to control the external apparatus based on a result of the voice recognition process by the voice recognition means. The switch is operative for controlling execution of the voice recognition process.

According to an another embodiment of the present invention, an electronic apparatus characterized by comprising first and second ear pads, each including a speaker, a microphone extending from one of the first and second ear pads, a voice recognition means for executing a voice recognition process to recognize a voice signal input through the microphone, an operation switch which is provided on another of the first and second ear pads which controls execution of the voice recognition process, and a command transmission means for transmitting, to an external apparatus, a command to control the external apparatus based on a result of the voice recognition process by the voice recognition means.

Embodiments of the invention may also be characterized as a method of controlling transmission of audio data from an audio transmitting apparatus to an audio device worn by a user for listening to the transmitted audio data. This method includes the steps of: receiving the transmitted audio data in the audio device; providing at least one speaker on the audio device for generating audible sounds corresponding to the received audio data; providing a microphone on the audio device for receiving audio commands from the user; transmitting the audio commands as radio wave commands to the audio transmitting apparatus in response to actuation of a switch, wherein the radio wave commands activate transmission of the audio data; and positioning the switch on the audio device remotely from the microphone.

Further embodiments of the invention are directed toward a method which controls an external apparatus capable of reproducing audio data by an electronic apparatus having a microphone and at least one speaker. The method includes receiving audio data transmitted by an audio data radio signal from an external apparatus; outputting the received audio data as a sound through the at least one speaker; executing a voice recognition process to recognize a voice signal input through the microphone in response to an operation of an operation switch provided remotely of the microphone; generating a command to control an audio reproduction operation of the external apparatus based on a result of the voice recognition process; and transmitting the generated command to the external apparatus by a command radio signal.

In the electronic apparatuss as described above, the microphone can be prevented from receiving noises, such as an operation sound of an operation switch for instructing execution of a voice recognition process is operated. Thus, the occurrence of an error in recognition due to noises can be reduced. Consequently, operations of an external apparatus, such as a portable music player, can be efficiently controlled by a voice input through the microphone.

As described above, according to the present invention, it is possible to provide an electronic apparatus that can efficiently control operations of an external apparatus, such as a portable music player, and a remote control method used in the apparatus.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing a configuration of an electronic apparatus (headset) according to an embodiment of the present invention.
FIG. 2 is a diagram showing a wireless communication system using the headset of the embodiment.
FIG. 3 is a diagram showing a configuration of a headset of the wireless communication system shown in FIG 2.
FIG. 4 is a diagram showing a configuration of a personal computer in the wireless communication system shown in FIG. 2.
FIG. 5 is a flowchart showing a flow of remote control executed by the headset of the embodiment.

An embodiments of the present will now be described with reference to the accompanying drawings.

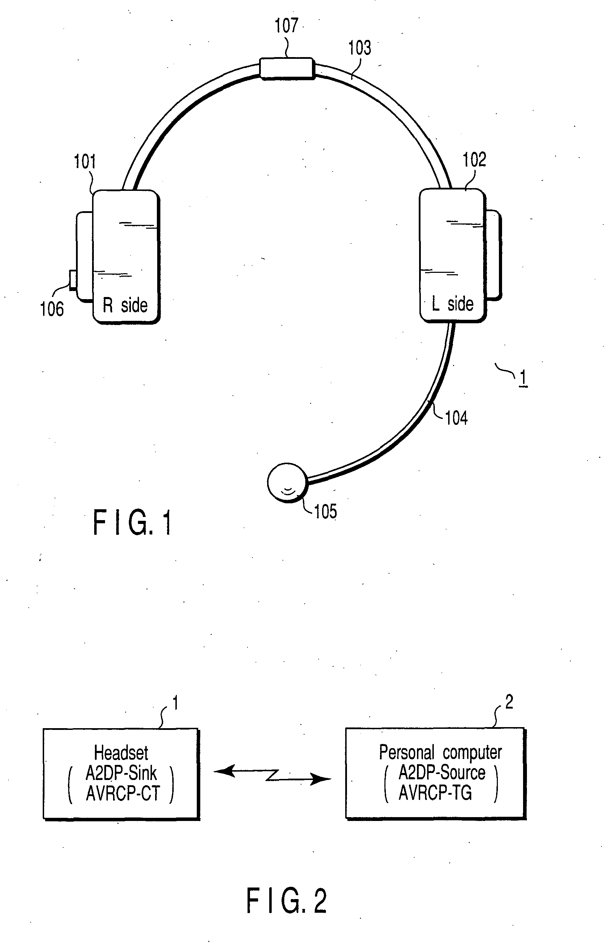

FIG. 1 shows a configuration of an electronic apparatus according to the embodiment of the present invention. The electronic apparatus is implemented as a headset having a wireless communication function. The wireless headset 1 is an output device, which generates a sound corresponding to audio data transmitted through a radio signal from an external apparatus, such as a portable audio player or a personal computer. The wireless headset 1 is detachably put on the user's head.

The wireless headset 1 has a right ear pad 101 and a left ear pad 102 as shown in FIG. 1. The two ear pads 101 and 102 are provided at both ends of a headband 103. Each of the ear pads 101 and 102 incorporates a speaker. When the wireless headset 1 is put on the user's head, the ear pads 101 and 102 respectively cover the right and left ears of the user. Thus, the ear pad 101 serves as a speaker unit for the right ear, while the ear pad 102 serves as a speaker unit for the left ear.

The wireless headset 1 further comprises a microphone 105. The microphone 105 extends from the ear pad 102. In other words, one end of a microphone arm 104 is connected to the ear pad 102 and the microphone 105 is attached to the other end of the microphone arm 104. The microphone arm 104 is rotatably connected to the ear pad 102. FIG. 1 shows an example, in which the one end of the microphone arm 104 is connected to the lower surface of the ear pad 102. However, the microphone arm 104 can be connected to any portion of the ear pad 102.

A push-to-talk (PTT) switch 106 is provided on the outer surface of the ear pad 101. The PTT switch 106 is an operation switch for causing execution of a voice recognition processing function of the wireless headset 1. The voice recognition is a function for recognizing a voice signal input through the microphone 105 and generating a command for controlling an external apparatus, such as a portable audio player or personal computer, based on the recognition result.

In one embodiment, the PTT switch 106 is made of, for example, a contact switch having an ON position and an OFF position. The PTT switch 106 is normally set to the OFF position by an elastic member. It is set to the ON position only while the user is pushing it. When the user releases the PTT switch 106, the switch returns to the OFF position. One advantage of this type of switch is that it requires the operator to continuously hold down the switch to perform voice recognition and commands and thereby serves to prevent inadvertent actuation of the switch.

In other embodiments, other types of switches may be used such as a slide switch or push button switch which do not require that the operator continuously actuate the switch to activate the talk feature, but require only momentary actuation of the switch.

The PPT switch (or other type of switch) may be located at or near the speaker unit (e.g., on the ear pad 101) as shown in FIG.1 or may be positioned on a speaker support unit such as a headband, e.g., the headband 103. Preferably, the switch is located at a position which is remote from the microphone 105. By a remote location, it is intended to mean either that the distance between the switch and the microphone is larger that the distance between the microphone and the speaker unit closest to the switch or that a portion of the user's head intervenes between the microphone and the switch when the headset is being worn by the user under normal operating conditions. By positioning the switch remotely of the microphone, the sound of the operation of the switch does not interfere with the voice recognition operations of the system from sound input by the microphone from the speaker's voice.

The user operates the PTT switch 106 to instruct the wireless headset 1 to activate the voice recognition process. In other words, the voice recognition function is normally stopped, and started by the user's pressing the PTT switch 106. With the PTT switch 106, the user can execute the voice recognition process only when deemed necessary by the user. Thus, erroneous recognition can be prevented.

Preferably, the PTT switch 106 is provided at a position remote from the microphone. For example, the PTT switch may be positioned on the ear pad 101 on the side opposite to the ear pad 102 on which the microphone 105 is provided. Therefore, the noise, such as an operation noise of the PTT switch 106, is less easily input to the microphone 105 in the voice recognition process, as compared to the case where the PTT switch is provided on the same side as the ear pad 102. Thus, occurrence of erroneous recognition can be reduced. Further, in considering actual use of the headset, if both the PTT switch 106 and the microphone 105 are mounted on the ear pad 102, various problems may occur. For example, when the user operates the PTT switch 106, his or her hand may touch the microphone arm 104, or the ear pad 102 itself may be vibrated by the operation of the PTT switch 106. In this case, noise other than the user's voice may be input through the microphone 105.

In this embodiment, since the PTT switch 106 is provided on the ear pad 101 on the side opposite to the ear pad 102 on which the microphone 105 is provided, occurrence of erroneous recognition can be drastically reduced.

The wireless headset 1 further comprises an antenna 107 for wireless communication. As shown in FIG. 1, the antenna 107 is provided on, for example, the headband 103.

FIG. 2 shows a wireless communication system using the headset 1. The headset 1 executes wireless communication compliant with, for example, the Bluetooth(R) standard. Thus, the headset 1 is able to communicate with other various apparatuses having wireless communication functions compliant with the Bluetooth(R) standard. In the Bluetooth(R) standard, a master-slave wireless communication system is used. In this system, wireless communication is executed between a master and each of the slaves wirelessly connected to the master. In the following description, it is assumed that the headset 1 wirelessly communicates with a personal computer 2.

The headset 1 has a Sink function of the Advanced Audio Distribution Profile (A2DP) and a CT function of an Audio Video Remote Control Profile (AVRCP).

The A2DP-Sink function is a function of the destination device of streaming reproduction of audio data, such as music. It reproduces the stream of audio data transmitted by a radio signal, while receiving it.

The AVRCP-CT function is a function of a controlling device in remote control. It transmits a remote control signal to a controlled device by a radio signal.

The personal computer 2 is, for example, a notebook computer. The personal computer 2 has a Source function of A2DP and a TG function of AVRCP.

The A2DP-Source function is a function of the source device in streaming reproduction. It transmits a stream of audio data by a radio signal. A music player is installed as an application program in the personal computer 2. The music player executes streaming transmission of music data through a wireless connection (link) established between the headset 1 and the personal computer 2.

The AVRCP-TG function is a function of a controlled device in remote control. It executes, for example, a start and stop or a pause and restart of streaming reproduction based on a remote control signal transmitted from the controlled device by a radio signal.

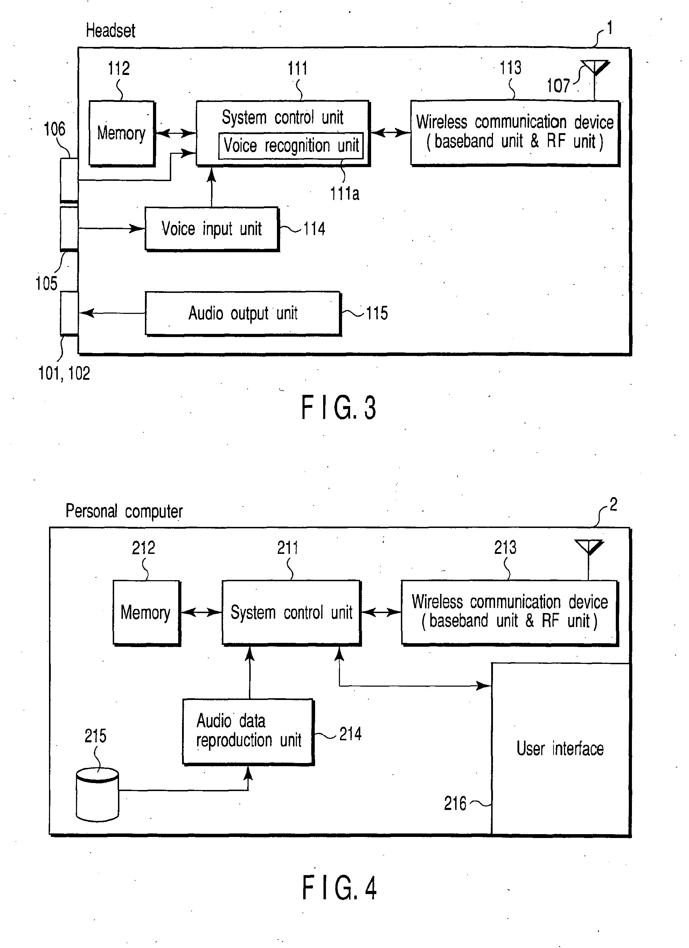

FIG. 3 shows a configuration of the headset 1.

As shown in FIG. 3, the headset 1 comprises the speaker units 101 and 102, the microphone 105, the PTT switch 106 and the antenna 107 shown in FIG. 1. In addition, it comprises a system control unit 111, a memory 112, a wireless communication device 113, a voice input unit 114 and an audio output unit 115.

The system control unit 111 is a processor to control operations of the headset 1. It controls the wireless communication device 113, the voice input unit 114 and the audio output unit 115 by executing the programs stored in the memory 112. The system control unit 111 includes a voice recognition unit 111a for executing the above-mentioned voice recognition process.

The memory 112 is formed of, for example, a nonvolatile storage medium, which stores a program for controlling operations of the headset 1. The program includes routines for causing the system control unit 111 to execute the A2DP-Sink function, the AVRCP-CT function, etc.

The wireless communication device 113 executes wireless communication between the headset 1 and the personal computer 2 through procedures compliant with the Bluetooth(R) standard. It comprises a baseband processing unit and an RF unit. The wireless communication device 113 receives audio data, such as music, transmitted from the personal computer 2 by a radio signal, and transmits a remote control signal to the personal computer 2 by a radio signal.

The voice input unit 114 converts the user's voice input through the microphone 105 from an analog signal to a digital signal, and transmits the digital signal to the system control unit 111.

The audio output unit 115 receives a stream of audio data, such as music, transmitted from the personal computer 2 through the wireless communication device 113 and the system control unit 111. During the reception, it executes a data reproduction process for converting the audio data to an electric signal that can be output as a sound through the speaker units 101 and 102.

FIG. 4 shows a configuration of the personal computer 2. In the following, only the configuration relating to communication with the headset 1 will be described.

The personal computer 2, as shown in FIG. 4, comprises a system control unit 211, a memory 212, a wireless communication device 213, an audio data reproduction unit 214, a storage device 215 and a user interface 216.

The system control unit 211 is a processor to control operations of the personal computer 2. It controls the wireless communication device 213, the audio data reproduction unit 214, etc. by executing the programs stored in the memory 212.

The memory 212 stores programs for controlling operations of the personal computer 2. The program includes routines for causing the system control unit 211 to execute the A2DP-Source function and the AVRCP-TG function.

The wireless communication device 213 executes wireless communication between the headset 1 and the personal computer 2 through procedures compliant with the Bluetooth(R) standard. It comprises a baseband processing unit and an RF unit. The wireless communication device 213 transmits audio data, such as music, to the headset 1 by a radio signal, and receives a remote control signal transmitted from the headset 1 by a radio signal.

The audio data reproduction unit 214 reads, from the storage device 215, a stream of audio data, such as music, to be stream-reproduced in the headset 1. It transmits the read stream of data to the system control unit 211.

The user interface 216 is formed of, for example, a display monitor, a keyboard, a pointing device, etc. It allows the user to select audio data to be reproduced and controls a start and stop function of reproducing the audio data.

When the headset 1 and the personal computer 2 having the structures as described are wirelessly connected, the headset 1 can receive music data stream-transmitted from the personal computer 2 through the A2DP connection, and can transmit a remote control signal to the personal computer 2 through the AVRCP connection.

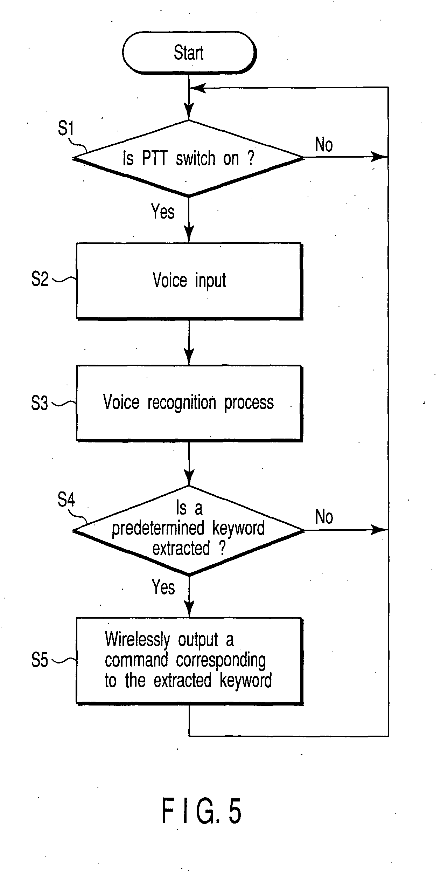

FIG. 5 is a flowchart showing a flow of remote control executed by the headset 1.

When the PTT switch 106 is pushed (YES in a step S1), a voice is input through the microphone 105 (a step S2) and the headset 1 executes a voice recognition process for the input voice (a step S3). As a result of the voice recognition process, if a keyword associated beforehand with a command to control the personal computer 2 is extracted (YES in a step S4), the headset 1 transmits a command corresponding to the extracted keyword from the antenna 107 to the personal computer 2 by a radio signal (a step S5).

As described above, the voice recognition process for transmitting a command is executed by a voice input through the microphone 105 only when the PTT switch 106 is depressed. In the headset 1 of this embodiment, the PTT switch 106 and the microphone 105 are respectively provided on the ear pads 101 and 102 on the different sides. Therefore, the microphone 105 can be prevented from receiving noises, such as an operation sound of the PTT switch 106. As a result, the operations of the personal computer 2 can be efficiently controlled by a voice input through the microphone 105.

It is also contemplated that embodiments of the invention may be carried out with only one speaker unit. In such a case, the switch for activating the voice commands may be positioned remotely from the microphone, as, for example on the headband or on a side of the earpiece away from the microphone.

It is further contemplated that in other embodiments of the invention, the microphone is connected to the headband rather than to the ear pad.

## Claims

1. An electronic apparatus **characterized by** comprising:
a speaker support unit including at least one speaker;
a microphone (105);
a voice recognition means (111a) for executing a voice recognition process to recognize a voice signal input through the microphone;
an operation switch (106) which is provided remotely of said microphone, said switch operative for controlling execution of the voice recognition process; and
a command transmission means (111) for transmitting, to an external apparatus, a command to control the external apparatus based on a result of the voice recognition process by the voice recognition unit.

2. The electronic apparatus according to claim 1, **characterized by** further comprising a wireless communication means (113) for executing wireless communication, and
the command transmission means transmits the command to the external device through the wireless communication means by a radio signal.

3. The electronic apparatus according to claim 1, **characterized by** further comprising:
a wireless communication means (113) for executing wireless communication;
a reception means (111) for receiving audio data transmitted through the wireless communication unit from the external apparatus by an audio data radio signal; and
an output means (115) for outputting the received audio data as a sound through the at least one speaker, and
the command transmission means transmits the command to the external apparatus through the wireless communication means by a command radio signal.

4. The electronic apparatus according to claim 1, **characterized in that**:
the operation switch has an ON position and an OFF position; and
the voice recognition means executes the voice recognition process for the voice signal input through the microphone only during a period in which the operation switch is set to the ON position by a user.

5. The electronic apparatus according to claim 4, **characterized in that** the operation switch is normally biased to an OFF position and retains the ON position only while being manually depressed by the user.

6. The electronic apparatus according to claim 1, **characterized in that** the electronic apparatus comprises a headset.

7. The electronic apparatus according to claim 5, **characterized in that** the speaker support unit comprises a headband (103) and said microphone is connected to one of said at least one speaker and said headband.

8. The electronic apparatus according to claim 7, **characterized in that** the at least one speaker comprises a first and second speaker each having an ear pad associated therewith.

9. The electronic apparatus according to claim 8, **characterized in that** the microphone is connected to said first speaker and switch is positioned adjacent said second speaker.

10. An electronic apparatus **characterized by** comprising:
first and second speakers (101,102);
a microphone (105) extending from one of the first and speakers;
a wireless communication means (113) for executing wireless communication;
a reception means (111) for receiving audio data transmitted by an audio data radio signal from an external apparatus capable of reproducing audio data;
an output means (115) for outputting the received audio data as a sound through the first and second speakers;
a voice recognition means (111a) for executing a voice recognition process to recognize a voice signal input through the microphone;
an operation switch (106) which is provided on another of the first and second speakers for commanding execution of the voice recognition process;
a command generation means (111) for generating a command to control an audio reproduction operation of the external apparatus based on a result of the voice recognition process executed by the voice recognition means; and
a command transmission means (113) for transmitting the generated command to the external apparatus through the wireless communication means by a command radio signal.

11. A remote control method which controls an external apparatus capable of reproducing audio data by an electronic apparatus having a microphone and at least one speaker, said method **characterized by** comprising the steps of:
receiving audio data transmitted by an audio data radio signal from an external apparatus;
outputting the received audio data as a sound through the at least one speaker;
executing (S3) a voice recognition process to recognize a voice signal input through the microphone in response to an operation of an operation switch provided remotely of said microphone;
generating a command to control an audio reproduction operation of the external apparatus based on a result of the voice recognition process; and
transmitting (S5) the generated command to the external apparatus by a command radio signal.

12. A remote control method which controls an external apparatus capable of reproducing audio data by an electronic apparatus having first and second speaker; and a microphone extending from one of the first and second speakers, said method **characterized by** comprising the steps of:
receiving audio data transmitted by an audio data radio signal from an external apparatus capable of transmitting audio data;
outputting the received audio data as a sound through the first and second speakers;
executing (S3) a voice recognition process to recognize a voice signal input through the microphone in response to an operation of an operation switch provided on another of the first and second speakers;
generating a command to control an audio reproduction operation of the external apparatus based on a result of the voice recognition process; and
transmitting (S5) the generated command to the external apparatus by a command radio signal.

13. A method of controlling transmission of audio data from an audio transmitting apparatus to an audio device worn by a user for listening to said transmitted audio data **characterized by** comprising the steps of:
receiving said transmitted audio data in said audio device;
providing at least one speaker on the audio device for generating audible sounds corresponding to the received audio data;
providing a microphone on the audio device for receiving audio commands from the user;
transmitting the audio commands as radio wave commands to the audio transmitting apparatus in response to actuation of a switch, said radio wave commands activating transmission of said audio data; and
positioning said switch on said audio device remotely from said microphone.
